Europäisches Patentamt

European Patent Office

Office européen des brevets

(11) Numéro de publication : **0 384 799 B1**

## (12) FASCICULE DE BREVET EUROPEEN

(45) Date de publication du fascicule du brevet :
**22.04.92 Bulletin 92/17**

(51) Int. Cl.$^5$ : **B60G 21/055**

(21) Numéro de dépôt : **90400352.2**

(22) Date de dépôt : **09.02.90**

(54) **Procédé de réalisation de barres antidévers par collage in situ de paliers élastiques et barres antidévers réalisés selon ce procédé.**

(30) Priorité : **20.02.89 FR 8902186**

(43) Date de publication de la demande :
**29.08.90 Bulletin 90/35**

(45) Mention de la délivrance du brevet :
**22.04.92 Bulletin 92/17**

(84) Etats contractants désignés :
**AT BE CH DE ES FR GB GR IT LI LU NL SE**

(56) Documents cités :
**EP-A- 0 251 845**

(56) Documents cités :
**DE-A- 2 358 736**
**DE-A- 2 608 553**
**DE-A- 3 112 252**
**FR-A- 2 564 043**
**FR-A- 2 574 886**
**US-A- 2 275 637**

(73) Titulaire : **CAOUTCHOUC MANUFACTURE ET PLASTIQUES SOCIETE ANONYME**
**143 bis, rue Yves Le Coz**
**F-78000 Versailles (FR)**

(72) Inventeur : **Dagonet, Thierry**
**27, rue du Levant**
**F-58300 Decize (FR)**

EP 0 384 799 B1

Jouve, 18, rue Saint-Denis, 75001 PARIS

## Description

L'invention est relative à une suspension pour un véhicule automobile comportant une barre de torsion antidévers, aussi bien qu'à une suspension secondaire, c'est-à-dire entre bogie et caisse, d'un véhicule ferroviaire comportant elle aussi une barre antidévers. Reliée par leviers à la suspension de chaque roue d'un même essieu, une telle barre antidévers, également dite antiroulis, est fixée à la caisse ou au chassis par deux paliers d'articulation élastique. Sur un poids lourd, ces paliers sont souvent fixés sur l'essieu et les leviers au chassis.

L'invention est relative au moyen de fixation de ces différents types de paliers sur la barre elle-même.

L'utilité d'une barre antidévers vient en corollaire des améliorations de confort sur les suspensions d'automobiles ou ferroviaires, dont la flexibilité accrue laisse incliner la caisse sous l'effet des forces centrifuges en virage. Certains choix de compromis admettent qu'un tel "dévers" peut accompagner un grand confort, mais l'inclinaison des plans de roue vers l'extérieur peut aller jusqu'à détériorer les qualités d'adhérence latérale en automobile. Au contraire, l'inclinaison des véhicules ferroviaires peut provoquer un certain inconfort pour les passagers.

Le maintien d'une bonne tenue de route et du confort ainsi justifié conduit les constructeurs à accroître la rigidité de roulis, c'est-à-dire celle présentée aux débattements différentiels des deux roues d'un essieu. Ledit accroissement de rigidité s'obtient au moyen de la raideur d'une barre de torsion doublement coudée, s'opposant au gauchissement de son plan, sans gêner le tourillonnement qui se produit sur ses paliers lors du débattement vertical simultané. Une réalisation par assemblage de leviers, emmanchés sur une barre rectiligne, permet d'articuler celle-ci au moyen de paliers qui lui sont extérieurs.

Par contre, la réalisation la plus courante est celle d'une barre d'acier forgé, conformée pour réaliser de façon monobloc, à la fois les leviers et la partie rectiligne de la barre de torsion.

Dans ces applications, le palier est constitué le plus souvent d'élastomère ou de polyuréthane et, enfermé dans un boîtier de fixation à la caisse (ou à l'essieu, dans les dispositifs inversés), vient entourer la barre.

Des artifices peuvent s'avérer nécessaires pour le maintien du positionnement dans le sens latéral. Le brevet européen EP-B-0 104 990 d'Automobiles Peugeot et Automobiles Citroën prévoit la fixation du centre de la barre antidévers à la structure du véhicule au moyen d'un tirant élastiquement déformable en torsion. Le brevet européen EP-B-0 251 845, des mêmes déposants, assure la liaison transversale par un écrasement local sensiblement elliptique de la barre, l'élastomère du palier recevant une forme conjuguée et des moyens d'arrêt transversaux.

Par ailleurs, le brevet européen EP-B-0 227 869 de la Régie Renault décrit un moyen de différentier les rigidités longitudinale et verticale des paliers, par des butées permettant un débattement angulaire lors de la rotation de la barre, mais utilisées en contact sur une cage extérieure pour tout mouvement vertical, à travers une mince couche d'élastomère. L'objet principal dudit brevet est de permettre, par une flexibilité longitudinale accrue du palier, "d'avaler en douceur les chocs sur le train de suspension" et de filtrer ainsi, mais dans une seule direction, la transmissibilité vibratoire des paliers. Ceux-ci font appel à la technique plus coûteuse de la liaison caoutchouc-métal adhérisée aux armatures indéformables, ce qui oblige à décomposer les éléments élastiques en deux fois plus de pièces.

Il est à remarquer que les trois brevets cités s'éloignent, par restriction de la flexibilité dans au moins une direction, du meilleur filtrage assuré dans toutes les directions par le palier moulé en caoutchouc de l'art antérieur traditionnel. Ce type de paliers est engagé sur la barre antidévers grâce à l'existence d'une fente refermée après passage forcé, le bridage dans un boîtier servant à la fixation sur chassis (ou sur essieu éventuellement). Le filtrage en toutes directions n'est limité, dans cette disposition, que par la nécessité de restreindre la flexibilité.

Pour ce faire, il convient de limiter l'épaisseur du caoutchouc, pour qu'une déformation parasite, lors d'un effort différentiel en roulis, ne vienne pas réduire l'effet de la barre par addition en série à sa flexibilité propre de roulis d'une flexibilité de palier. A l'opposé, le débattement vertical simultané est, lui, favorisé par l'épaisseur la plus grande de caoutchouc.

La précontrainte favorable, exercée par le boîtier d'assemblage sur l'élastomère ne parvient pas toujours à dépasser l'effort appliqué par la barre sur celui-ci lors d'un dévers. Un décollement occasionnel entre barre et caoutchouc, dans les dévers importants, n'est pas nuisible, tandis que les petits débattements sont assurés par déformation dans toute la masse de l'élastomère. Mais il en résulte des introductions de poussière, boue et sources de corrosion. Des grincements et des grognements se produisent de façon désagréable, avant même que la détérioration de la barre ne devienne un risque, et ce désagrément fait perdre au véhicule tout l'attrait de la grande flexibilité exigée par un confort amélioré.

L'état de la technique est donc arrivé au point que les constructeurs cherchent à assurer la permanence de la liaison entre le caoutchouc et la barre par l'adhérisation, ce qui exige la fabrication du palier élastomérique par moulage sur la barre elle-même. La Régie Renault a déposé la demande de brevet français n° 88 10238, décrivant ce type de fabrication.

Un problème apparaissant au cours de l'expérimentation de pièces réalisées conformément à cette technique, est posé par la protection contre l'oxydation de la barre, elle-même composant de l'assemblage obtenu par adhérisation de celle-ci au caoutchouc du palier élastique. Quelle que soit la qualité de la peinture de protection mise en oeuvre, il s'avère que les sollicitations, exercées en cisaillement par la torsion de l'élastomère au contact direct de la peinture de protection, dépassent la tenue de ladite peinture sur la barre. La défaillance de cette tenue limite l'intérêt de la fabrication directe par moulage sur la barre, même lorsque la peinture est appliquée par électrophorèse comme décrit dans le brevet EP-B-0 054 861 de METZELER.

Le remède est l'absence de protection sur la partie de la barre de torsion qui vient en contact avec l'élastomère, obtenue soit par mise en place de caches soit par élimination de la peinture. Cette complication du procédé de fabrication doit être complétée par des précautions pour protéger la limite entre zone peinte et zone adhérisée à l'élastomère, limite où, justement, se fait l'étanchéité du moule lors de la fabrication.

En effet, la réalisation, par moulage, sur une barre de torsion, avec incorporation d'armatures de fixation, impose la fermeture complète du moule, de part et d'autre duquel doivent être montés des moyens d'étanchéité sur la barre.

Pour la simple réalisation en place d'un palier élastique, de dimensions ne dépassant guère 5 à 6 centimètres, un objet de plus d'un mètre d'encombrement et de plusieurs kilogrammes de masse doit être manipulé et approvisionné depuis un atelier de fabrication spécialisé. Ne serait-ce que pour ces manipulations et les stockages intermédiaires, il a été nécessaire d'appliquer une protection contre la corrosion, sur les faces définitivement extérieures d'une part et, éventuellement, sur les surfaces destinées à recevoir les paliers élastiques.

L'objectif de la présente invention est d'apporter aux défauts des solutions de l'art antérieur une solution économique et de mise en oeuvre simple, évitant le moulage direct des paliers sur une barre de torsion qui - malgré ses dimensions - devait être manipulée et enfermée dans un moule, sous une presse de vulcanisation.

L'invention consiste à fabriquer séparément chacune des pièces de caoutchouc adhérisé à une armature semi-rigide, réalisée en plastomère. Ladite armature est solidarisée à la barre de torsion, par un apport de matière adhésive durcie in situ, après la déformation qui aura permis le passage par dessus la barre de ladite armature, formée d'une bague fendue.

Un tel collage peut se faire par colle thermofusible, par durcissement structural de colle à un ou à deux composants ou encore par insertion d'un matériau thermoplastique approprié. La température à laquelle s'effectue cette opération doit, bien évidemment, rester compatible avec la présence de l'élastomère qui est adhérisé sur l'autre face d'une bague fendue en plastique déformable.

L'invention a donc pour objet un procédé de réalisation de barre antidévers pour suspension d'automobile ou suspension ferroviaire à grande flexibilité, ladite barre antidévers étant constituée d'une barre de torsion équipée de paliers élastiques, fendus, déformables, réalisés en élastomère adhérisé au cours du moulage à des armatures plastiques semi-déformables et passés en force par dessus ladite barre de torsion.

L'invention est caractérisée en ce que :
a) lesdits paliers élastiques sont réalisés, indépendamment, par moulage,
b) lesdits paliers élastiques sont collés in situ sur ladite barre de torsion par un apport de matière adhésive, durcie en place après l'assemblage.

L'invention et ses variantes seront mieux comprises à la lecture de la description accompagnant les dessins, dans lesquels :
– la figure 1 est une vue générale d'une barre antidévers constituée d'une barre de torsion équipée de ses paliers élastiques, telle qu'elle est approvisionnée vers la chaîne de montage du constructeur ;
– la figure 2 est une coupe, par un plan diamétral, d'un palier élastique monté sur une barre de torsion ;
– la figure 3 est une coupe, par un plan perpendiculaire à l'axe, du palier élastique fabriqué préalablement à l'assemblage ;
– la figure 4 décrit, par trois vues et coupes, une variante de palier avec alvéoles et armature intermédiaire en secteurs.

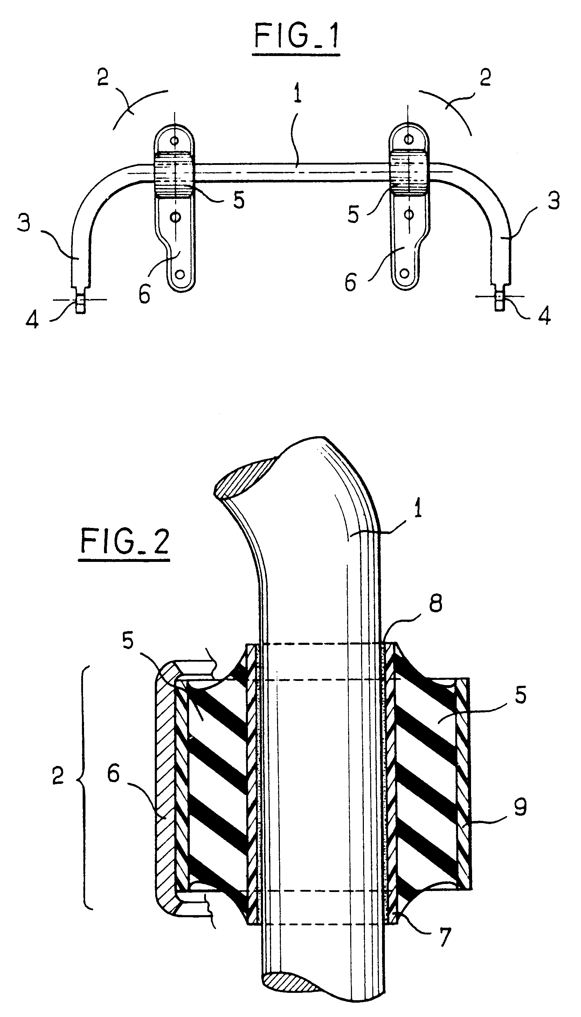

La figure 1 est une vue extérieure, de dessus, dans la position d'utilisation sur automobile ou sur bogie ferroviaire, d'une barre antidévers, constituée d'une barre de torsion équipée de ses paliers élastiques.

La barre de torsion (1) est obtenue par forgeage d'une barre ronde, de manière à ce qu'elle reste rectiligne dans sa partie centrale et soit coudée au-delà des paliers (2) pour former les leviers (3) sur lesquels se fixent des biellettes de liaison aux suspensions, par exemple par les trous (4). Dans cette variante, les paliers de caoutchouc (5), sensiblement cylindriques, sont solidarisés sur la moitié de leur circonférence à des demi-armatures de fixation (6). Le boulonnage en place sur le berceau de caisse par les trous représentés sur lesdites demi-armatures (6) vient ultérieurement compléter la périphérie des paliers de caoutchouc (5), exerçant alors une précontrainte favorable sur l'élastomère.

Le retrait après moulage ne permettrait pas d'exercer une telle contrainte dans le cas où une armature extérieure complète serait adhérisée au caoutchouc.

La figure 2 est une coupe par un plan passant par l'axe d'un palier élastique monté sur la barre de torsion, conformément à l'invention.

Ladite barre de torsion (1) est rendue mécaniquement solidaire du palier de caoutchouc (5) par un collage performant sur la douille formant armature intérieure (7), elle-même adhérisée au cours du moulage, lors de la fabrication du palier (2), par les procédés connus pour la liaison physico-chimique intime d'un plastomère à un élastomère, lors de la vulcanisation de de ce dernier.

La liaison est symbolisée sur la figure par une ligne de collage (8), étant bien précisé qu'une réalisation de bonne qualité demande à la couche de colle d'être la plus mince possible après l'assemblage. Dans la variante représentée, une armature extérieure (9), cylindrique, est également adhérisée, au cours du moulage, au palier de caoutchouc (5). Elle peut être solidarisée à la demi-armature de fixation (6). Un moyen préférentiel de solidarisation est constitué par le même procédé de collage sur une surface de contact du même ordre d'étendue que la liaison entre la douille formant armature intérieure (7) et la barre de torsion (1).

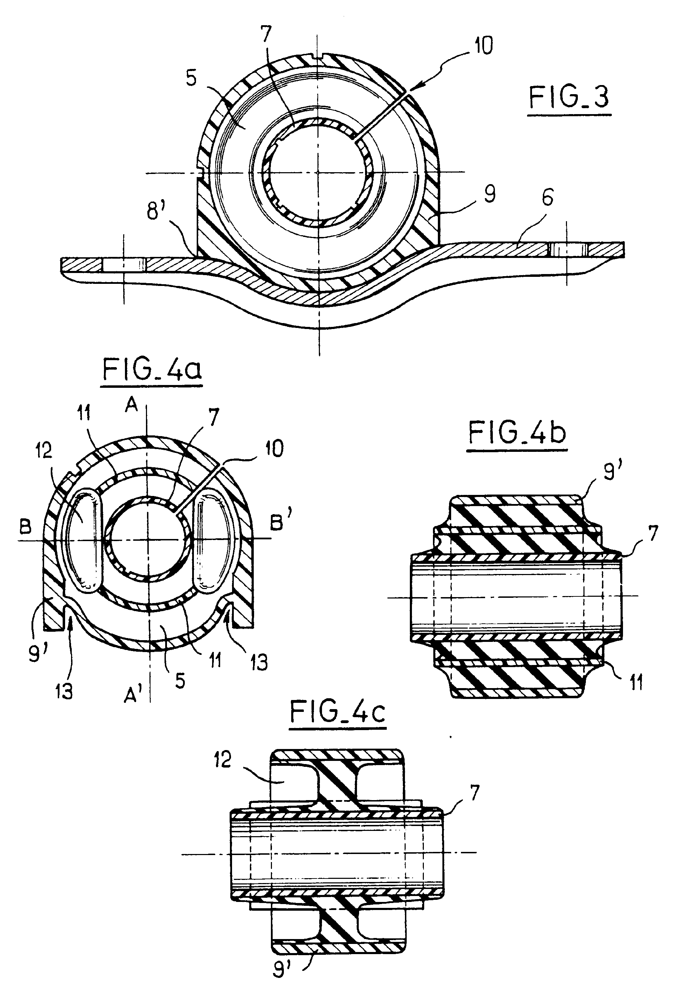

La figure 3 représente, par une coupe perpendiculaire à l'axe, le composant palier après son moulage, mais avant l'assemblage sur la barre de torsion.

La variante représentée peut avoir été réalisée soit par une opération supplémentaire de collage de l'armature extérieure (9) selon la ligne de collage (8') sur la demi-armature de fixation (6), le plus couramment en tôle d'acier emboutie, soit par un mode de fixation directe, par l'infiltration de gomme entre la demi-armature de fixation (6) et l'armature extérieure (9).

Ladite armature extérieure (9) est réalisée en plastomère chimiquement traité en vue de l'adhérisation sur sa face intérieure. Préférentiellement, l'adhérisation simultanée, au cours du moulage, de sa face extérieure permet sa solidarisation avec la demi-armature de fixation (6), selon la ligne de collage (8').

La douille formant armature intérieure (7), l'armature extérieure (9) et le palier de caoutchouc (5) présentent une fente (10) selon un plan passant par l'axe. Ladite fente (10) est obtenue soit directement au cours du moulage soit réalisée par sciage ultérieur des composants. Elle a comme seul rôle la possibilité d'ouverture temporaire, par forçage mécanique, pour faire passer radialement la barre de torsion (1) à l'intérieur de la douille formant armature intérieure (7).

Ce forçage peut, bien sur, être exercé à température contrôlée des composants plastiques ; il aura lieu juste avant le collage in situ sur la barre de torsion, ce qui justifie l'emploi de colles thermofusibles, le maintien provisoire des éléments jusqu'à durcissement de la matière adhésive étant assuré par un moyen approprié.

L'ouverture élastique de la douille étant une condition impérative pour le montage des paliers sur la barre de torsion, il est possible de ménager une (ou plusieurs) charnière(s), sous forme de rainure(s) longitudinale(s), réduisant localement l'épaisseur de la douille formant armature intérieure (7). Avantageusement, lesdites rainures sont utilisées pour recueillir l'excès de matière adhésive lors du collage, de façon que la liaison du palier de caoutchouc (5) à la douille formant armature intérieure (7), devenue un seul solide, assure bien à l'élastomère le frettage qui confère un niveau suffisant de rigidité radiale à l'ensemble du palier (2).

Une ou au plus deux charnières analogues peuvent être disposées sur l'armature extérieure (9) réalisée en plastomère pour permettre sa déformation, qui risque d'être bridée par l'indéformabilité de la demi-armature de fixation (6) généralement réalisée en tôle d'acier.

Dans cette disposition, un élastomère thermoplastique de module élevé, éventuellement renforcé de fibres courtes, peut être utilisé pour assurer, simultanément, les deux fonctions du composant solide représenté par la demi-armature de fixation (6) et du composant semi-plastique représenté par l'armature extérieure (9).

Une pièce, réalisée en un seul moulage, présente alors la déformabilité nécessaire au montage, avant d'être bridée par le boulonnage sur berceau.

Il sera néanmoins nécessaire que le boulonnage sur l'autre partie rigide, généralement d'un berceau sur caisse, de forme appropriée pour reconstituer la périphérie du palier de caoutchouc (5), exerce bien une précontrainte notable de l'élastomère. Ladite précontrainte est nécessaire à la fois pour abaisser la rigidité de torsion dudit palier sur l'axe de la barre de torsion et aussi pour améliorer la tenue à la fatigue répétitive de rotation autour dudit axe.

Au contraire de la seule solidarisation par serrage de la barre de torsion sur les paliers de caoutchouc connus de l'art antérieur, où une contrainte monodirectionnelle entre boîtier de fixation et axe de ladite barre dépassait cette précontrainte et conduisait au décollement avec introduction de pollution et de corrosion, la technique d'adhérisation au cours du moulage que respecte le procédé de collage revendiqué, permet des contraintes de traction sur l'élastomère, sans possibilité d'introduction de corps étrangers. La zone en traction de l'élastomère participe encore à la rigidité d'ensemble, améliorant la rigidité radiale par rapport à un palier en appui simple de mêmes dimensions.

En effet, le procédé de collage solide sur solide de la douille formant armature intérieure (7) sur la barre de torsion (1), même avec couche de peinture interposée, apporte une garantie de répartition de la sollicitation sur une plus grande surface.

A l'opposé, le moulage direct sur la barre de torsion, selon l'art antérieur, aurait provoqué un gradient élevé de ladite traction, pouvant dépasser la valeur de la tenue de la peinture sur l'acier de la barre de torsion, même si l'adhérence de l'élastomère sur ladite peinture est bien assurée.

En ce qui concerne le collage proprement dit, deux modes d'association sont réalisables :

– le premier consiste à réaliser un assemblage rigide constitué de la barre de torsion (1), d'une couche de matière adhésive rigide après durcissement et de la douille formant armature intérieure (7), de manière à ce que toute déformation se produise dans la totalité de l'assemblage rigide qui réagit comme une pièce unique ;

– le second consiste à réaliser un assemblage semi-rigide constitué de la barre de torsion (1), rigide, d'une couche de matière adhésive restant souple après durcissement et de la douille formant armature intérieure (7), de manière à ce que toute déformation de ladite barre de torsion (1) ne soit pas intégralement transmise à la totalité de l'assemblage, la couche de matière adhésive souple créant un gradient de module et répartissant, de ce fait, les contraintes à l'intérieur de l'assemblage.

Dans un mode d'assemblage comme dans l'autre, le collage met en jeu tout ou partie d'une adhérence mécanique aux substrats, d'une liaison chimique par des forces du type Van der Waals, du mouillage des substrats et de la cohésion propre de la matière adhésive qui doit être suffisante pour résister aux contraintes d'utilisation.

Selon les adhésifs choisis pour l'assemblage, il peut, éventuellement, s'avérer nécessaire de procéder à une préparation préalable des surfaces à encoller, pour assurer la meilleure adhérence en éliminant les souillures, les traces d'huile et d'humidité et éventuellement des traces d'oxydation, de façon à assurer la continuité physico-chimique entre la barre de torsion (1), d'une part, ou la douille formant armature intérieure (7) du palier de caoutchouc (5) d'autre part, et la matière adhésive.

Pour ce faire, la barre de torsion (1), sera préférentiellement dégraissée, localement, par utilisation de solvant, à l'emplacement du collage. Le choix de la matière adhésive appropriée doit permettre d'éviter tout autre traitement mécanique ou chimique - de la barre de torsion (1).

Comme la douille formant armature intérieure (7) est réalisée dans un matériau plastique semi-déformable, elle est, préférentiellement, fabriquée dans un polymère, homogène ou renforcé de fibres courtes, tel que du polyamide 6 ou 6.6, du polyimide, du polyester, du polychlorure de vinyle ou même du polycarbonate.

Selon la nature du matériau constitutif de la douille formant armature intérieure (7) et le mode d'association choisi, la matière adhésive est du type à durcissement par polymérisation, pour les colles anaérobies, pour les cyanoacrylates, pour les adhésifs acryliques modifiés ou du type à durcissement par polyaddition, pour les colles polyuréthanes, à deux composants liquides ou les époxydes.

Si nécessaire, un apport de chaleur local, par tout moyen approprié, permet d'accélérer le durcissement de la matière adhésive.

Les adhésifs anaérobies, monocomposants liquides ou pâteux, sont caractérisés par la résistance mécanique du collage, en particulier dans les sollicitations en cisaillement qui se produisent à l'interface barre de torsion (1)/douille formant armature intérieure (7).

Les cyanoacrylates, monocomposants liquides, ont pour avantage principal de permettre un collage à température ambiante et quasi-instantané.

Ils sont particulièrement adaptés à la réalisation des barres antidévers, fabriquées en série, le collage s'effectuant sur des surfaces de faibles dimensions de matériaux à faible jeu. Ces adhésifs présentent, également, une excellente résistance mécanique.

Dans cette famille, les cyanoacrylates d'éthyle et de butyle sont avantageusement sélectionnés pour l'assemblage, en raison de leur affinité pour les polymères, constituants - au moins partiels - à la fois de la douille formant armature intérieure (7) et de la peinture de protection de la barre de torsion.

Les adhésifs acryliques modifiés, monocomposants liquides ou pâteux à activateur liquide, le plus souvent de la famille des méthacrylates, polymérisent aussi à température ambiante et résistent particulièrement bien aux contraintes mécaniques de traction et de cisaillement rencontrées dans l'application aux suspensions. Ils présentent, en outre, l'avantage de ne pas nécessiter de préparation de surface des substrats.

Les adhésifs époxydiques, soit monocomposants en pâte ou en film, soit bicomposants liquides ou pâteux, durcissent à température ambiante lorsqu'ils sont bi-composants, résine et durcisseur, la prise pouvant être accélérée par un apport thermique ; ils nécessitent une cuisson, de l'ordre de 100 à 120°C pendant quelques minutes lorsqu'ils sont monocomposants. Cette catégorie d'adhésifs peut être utilisée pour la réalisation des assemblages rigides, les époxides présentant, le plus souvent, une rigidité élevée, mais aussi pour la réalisation des assemblages semi-rigides, sous réserve d'incorporer à la résine un plastifiant ou un flexibilisant.

Les adhésifs à base de polyuréthanes sont caractérisés par leur flexibilité qui permet de réaliser des assemblages semi-rigides. Les barres de torsion étant, le plus généralement, revêtues d'une peinture à base de polyuréthane, l'utilisation de ce type d'adhésifs accroît la compatibilité de la colle avec la peinture.

Outre les adhésifs précédents, il est également possible d'utiliser des colles thermo-fusibles qui se présentent à l'état solide, passent en phase liquide sous l'action de la chaleur et durcissent rapidement en refroidissant.

Elles s'appliquent au pistolet et sont particulièrement bien adaptées aux réalisations de grande série comme celle des barres antidévers.

Le procédé d'assemblage par collage revendiqué n'exclut pas l'emploi d'un palier de caoutchouc (5), avec des alvéoles ménagées sur ses faces latérales, de façon que la rigidité dans le sens longitudinal du véhicule (celui des leviers (3) de la barre antidévers) soit nettement plus faible que dans le sens vertical. La flexibilité verticale du palier élastique, dans le sens fonctionnel de la barre antidévers, est additive à la flexibilité de la barre en torsion et, par conséquent, doit être considérée comme parasite, malgré les besoins de filtrage antivibratoire qu'elle satisfait.

Pour résoudre cette apparente contradiction, le procédé n'exclut pas la possibilité, pour réduire la flexibilité verticale du palier élastique, de disposer une ou plusieurs armature(s) intermédiaire(s), dans le sens vertical, entre la douille formant armature intérieure (7) et l'armature extérieure (9), restée sensiblement cylindrique.

La figure 4 décrit, en trois vues et coupes perpendiculaires, une variante avec alvéoles et armature intermédiaire dans le composant palier, avant l'assemblage sur la barre de torsion. La vue 4a est une vue extérieure, la vue 4b est une coupe par le plan AA' et la vue 4c est une coupe selon le plan BB'.

L'armature intermédiaire peut être constituée de deux secteurs (11), de forme sensiblement quart de cylindre, laissant libre la fente (10) servant à l'ouverture forcée d'assemblage sur la barre de torsion.

Le maintien de ces composants dans le moule de fabrication du palier de caoutchouc (5) est compatible avec la forme des alvéoles (12) sur lesquelles lesdits secteurs (11) peuvent venir déboucher par un appui sur les parois de l'empreinte du moule.

Afin qu'une précontrainte puisse être exercée, l'armature extérieure (9') est représentée réalisée en deux éléments pouvant être rapprochés, lors de l'assemblage final sur berceau de caisse. Cette opération est réalisable, sans séparation en deux pièces indépendantes qui compliquerait à la fois le moulage et le montage des paliers de caoutchouc (5), simplement en ménageant deux charnières (13) à paroi plus mince dans le matériau plastique constituant l'armature extérieure (9'). Ladite armature extérieure (9') présente une forme intérieure, face où elle est adhérisée à l'élastomère du palier de caoutchouc (5), peu différente d'un cylindre après la déformation de précompression à l'assemblage final.

Sa face extérieure est adaptée à celle du boîtier en deux parties où le palier (2) est alors enfermé.

L'existence de trois parois planes ou quasi-planes sur la forme extérieure du palier suffit pour encastrer, en rotation autour de l'axe de la barre de torsion, l'armature extérieure (9'), le couple dans ce sens étant volontairement peu élevé. Un collage intermédiaire sur des demi-armatures de fixation n'est pas nécessaire dans cette variante.

Par contre, un maintien élastique dans le sens transversal (suivant l'axe de la barre de torsion) est parfaitement possible par une bonne forme conjuguée du boîtier débordant, ce que suggère sur la vue 4b, le rayon en extrêmité de l'armature extérieure 9'.

Les vues 4b et 4c montrent que la douille formant armature intérieure (7) peut être plus longue que l'armature extérieure (9'), offrant, de ce fait, au collage sur la barre une surface plus élevée.

Ladite surface est sollicitée en cisaillement lors de la rotation de la barre de torsion aussi bien que lors d'efforts latéraux.

Dans la variante décrite, le facteur de forme élevé procuré à la partie du palier de forme sensiblement en quart de cylindre, par l'interposition de l'armature intermédiaire en forme de secteur (11), confère à l'ensemble la rigidité élevée recherchée dans le sens vertical. Les rigidités longitudinale et transversale peuvent être maintenues très filtrantes, car plus basses, par une épaisseur suffisante de l'élastomère, malgré cette première rigidité élevée. Il en est de même de la possibilité rotationnelle autour de l'axe de la barre de torsion.

Le procédé de réalisation de la brre antidévers à partir des différentes variantes de paliers de caoutchoucest donc le collage in situ, objet de la présente invention.

Un ensemble de palier (2) est le résultat d'un moulage en moule fermé selon des procédés utilisés de manière classique dans l'industrie de transformation des polymères, l'adhérisation des différentes armatures plastiques étant obtenue par encollage préalable des surfaces concernées.

Le moulage est opéré par transfert ou injection de l'élastomère à une température admissible par les matériaux plastomères concernés. Les faibles dimensions de la pièce moulée permettent des coûts de fabrication réduits par le moulage simultané de plusieurs paliers de caoutchouc dans un moule à empreintes multiples.

La fente est réalisée soit par un plan mince ménagé dans le moule, ce quinécessite l'utilisation d'armatures plastiques préalablement fendues, soit par un sciage après moulage, sur un bâti guidant une scie alternative ou circulaire, lubrifiée pour éviter la détérioration de l'élastomère.

Les paliers de caoutchouc sont alors passés dans une chambre à température contrôlée pour faciliter l'ouverture de la douille formant armature intérieure. Le collage éventuel sur une demi-armature de fixation peut être effectué après l'assemblage sur la barre de torsion.

Le revêtement, par exemple par pulvérisation, d'une couche mince de colle est réalisé, soit dans l'alésage de ladite douille formant armature intérieure, soit sur la zone concernée de la barre de torsion, soit sur les deux surfaces en regard, par exemple lors de l'emploi d'adhésifs à deux composants réagissant seulement lors de la mise en contact. Après engagement sur la barre de torsion, un montage formant pince impose l'orientation relative des paliers de caoutchouc et de la barre de torsion et impose, également, la fermeture de la fente, pendant la durée nécessaire au collage.

En résumé, le procédé de collage in situ de paliers de caoutchouc sur une barre de torsion apporte, par rapport aux techniques connues de l'art antérieur, les avantages suivants :

– il permet une souplesse d'exécution, à la cadence requise, ne nécessitant le stockage que de pièces maniables ;

– il évite des investissements d'équipements coûteux, les paliers de caoutchouc étant réalisables par campagnes de moulage sur des presses non spécialisées ;

– il supprime les efforts de manutention de pièces lourdes et volumineuses, par le personnel de l'atelier de fabrication ;

– il offre une adaptabilité des pièces, en fabrication, un changement de diamètre de la douille formant armature intérieure s'obtenant par simple substitution de broches dans un moule ;

– il permet, également, une adaptabilité des pièces au montage, le même palier de caoutchouc pouvant, sans peine, se monter sur des barres de torsion de géométries différentes ;

– au niveau de l'utilisation, il autorise la réalisation d'une barre antidévers présentant des débattements fonctionnels maximaux, sans provoquer un glissement du palier de caoutchouc qui serait source de bruit et de corrosion ;

– en cas d'avarie, il permet le remplacement d'un palier détérioré, hors d'un atelier de mécanique, par simple collage in situ de la pièce de faibles dimensions.

En conclusion, le procédé de collage in situ des paliers de caoutchouc sur une barre de torsion, selon l'invention, offre la possibilité de réalisation économique d'une barre antidévers sur ou à proximité de la chaîne de montage sur véhicules.

## Revendications

1. Procédé de réalisation de barre antidévers pour suspension d'automobile ou pour suspension ferroviaire à grande flexibilité, ladite barre antidévers étant constituée d'une barre de torsion (1), équipée de paliers (2), élastiques, fendus, déformables, réalisés en élastomère adhérisé au cours du moulage à des armatures plastiques semi-déformables et passés en force par dessus ladite barre de torsion (1), ledit procédé étant caractérisé en ce que lesdits paliers (2) sont réalisés indépendamment par moulage et en ce qu'ils sont collés in situ sur la barre de torsion (1) par un apport de matière adhésive durcie en place après l'assemblage.

2. Procédé de réalisation de barre antidévers selon la revendication 1, caractérisé en ce qu'une douille formant armature intérieure (7) du palier (2) est munie, outre une fente (10), d'au moins une rainure réduisant localement son épaisseur pour favoriser le passage en force desdits paliers (2) par dessus la barre de torsion (1) et recueillir l'excès de matière adhésive avant son durcissement.

3. Procédé de réalisation de barre antidévers selon l'une des revendications 1 ou 2, caractérisé en ce que ladite barre antidévers est constituée d'un assemblage rigide de la barre de torsion (1) et des paliers (2) par utilisation d'une matière adhésive rigide telle qu'un adhésif anaérobie, acrylique, modifié ou non, ou époxidique.

4. Procédé de réalisation d'une barre antidévers selon l'une des revendications 1 ou 2, caractérisé en ce que ladite barre antidévers est constituée d'un assemblage semi-rigide de la barre de torsion (1) et des paliers (2) par utilisation d'une matière adhésive souple telle qu'une colle polyuréthane ou un adhésif époxydique plastifié.

5. Barre de torsion antidévers réalisée conformément à l'une des revendications 1 à 4, caractérisée en ce que l'élastomère des paliers (2) est fretté, essentiellement dans le plan vertical, par au moins une armature intermédiaire en forme de secteurs (11).

6. Barre de torsion antidévers réalisée conformément à l'une des revendications 1 à 4, caractérisée en ce que des alvéoles (12) sont disposées sur les faces latérales des paliers (2) pour abaisser, dans le sens horizontal, la rigidité de déformation entre la douille formant armature intérieure (7) et l'armature extérieure (9) (9').

7. Barre de torsion antidévers réalisée conformément à l'une des revendications 1 à 4, caractérisée en ce que l'armature intermédiaire en forme de secteurs (11) frette l'élastomère d'un palier (2) dont les faces latérales sont munies d'alvéoles (12).

## Patentansprüche

1. Verfahren zur Herstellung eines Antirollstabes für eine Automobilfederung oder eine Schienenfahrzeugfederung großer Beweglichkeit, wobei der Antirollstab gebildet ist durch einen Torsionsstab (1), der mit elastischen, geteilten, verformbaren Lagern (2) versehen ist, die aus einem mit plastischen, halbverformbaren und unter Zwang auf den Torsionsstab (1) geschobenen Befestigungsteilen während des Formens haftend verbundenen Elastomer hergestellt sind, dadurch gekennzeichnet, daß die Lager (2) unabhängig durch Formens hergestellt und unter Zufphrung eines nach dem Zusammenbau an Ort und Stelle aushärtenden Klebstoffmaterials in situ auf dem Torsionsstab (1) verklebt werden.

2. Verfahren zur Herstellung eines Antirollstabes nach Anspruch 1, dadurch gekennzeichnet, daß eine das innere Befestigungsteil (7) des Lagers (2) bildende Büchse neben einem Spalt (10) mit mindestens einer örtlich ihre Dicke vermindernden Rille versehen ist, um das Aufschieben der Lager (2) unter Zwang auf den Torsionsstab (1) zu erleichtern und überschüssiges Klebstoffmaterial vor seiner Aushärtung aufzunehmen.

3. Verfahren zur Herstellung eines Antirollstabes nach einem der Ansprüche 1 oder 2, dadurch gekennzeichnet, daß der Antirollstab gebildet wird durch starres Zusammenfügen des Torsionsstabes (1) und der Lager (2) unter Verwendung eines starren Klebstoffmaterials, wie eines Anaerob- oder modifizierten oder nicht modifizierten Acrylklebers oder Epoxyklebers.

4. Verfahren zur Herstellung eines Antirollstabes nach einem der Ansprüche 1 oder 2, dadurch gekennzeichnet, daß der Antirollstab gebildet wird durch halbstarres Zusammenfügen des Torsionsstabes (1) und der Lager (2) unter Verwendung eines nachgiebigen Klebstoffmaterials, wie eines Polyurethanklebers oder eines plastifizierten Epoxyklebers.

5. Antirollstab hergestellt nach einem der Ansprüche 1 bis 4, dadurch gekennzeichnet, daß das Elastomer der Lager (2) im wesentlichen in der Vertikalebene durch mindestens einen Zwischenbeschlag in Form von Sektoren (11) verstärkt ist.

6. Antirollstab hergestellt nach einem der Ansprüche 1 bis 4, dadurch gekennzeichnet, daß auf den Seitenflächen der Lager (2) Zellen (12) angeordnet sind, um die Verformungsfestigkeit zwischen der den inneren Beschlag (7) bildenden Büchse und dem äußeren Beschlag (9, 9') in horizontaler Richtung zu vermindern.

7. Antirollstab hergestellt nach einem der Ansprüche 1 bis 4, dadurch gekennzeichnet, daß der Zwischenbeschlag in Form von Sektoren (11) das Elastomer eines Lagers (2) verstärkt, dessen Seitenflächen mit Zellen (12) versehen sind.

## Claims

1. A process for producing a highly flexible anti-roll bar for automotive or rail vehicle suspension, the said anti-roll bar consisting of a torsion bar (1), fitted with bearings (2) which are elastic, split and deformable, made of elastomer which is stuck during moulding to semi-deformable plastic reinforcements and forced over the above-mentioned torsion bar (1), the said process being characterised in that the said bearings (2) are produced independently by moulding and in that they are stuck in situ onto the torsion bar (1) by adding adhesive material which hardens in place after assembly.

2. A process for producing an anti-roll bar according to Claim 1, characterised in that a bushing forming an inner reinforcement (7) of the bearing (2) is fitted with a slot (10) and at least one groove reducing its thickness locally in order to make it easy to force the said bearings (2) over the torsion bar (1) and to collect the excess adhesive material before it hardens.

3. A process for producing an anti-roll bar according to either of Claims 1 and 2, characterised in that the said anti-roll bar consists of a rigid assembly of the torsion bar (1) and the bearings (2) made with the use of a rigid adhesive material such as an anaerobic, acrylic (modified or unmodified), or epoxide adhesive.

4. A process for producing an anti-roll bar according to either of Claims 1 or 2, characterised in that the said anti-roll bar consists of a semi-rigid assembly of the torsion bar (1) and the bearings (2) made with the use of a flexible adhesive material such as a polyurethane glue or a plasticised epoxide adhesive.

5. An anti-roll torsion bar produced in conformity with any of Claims 1 to 4, characterised in that the elastomer of the bearings (2) is armoured, essentially in the vertical plane, by at least one intermediate reinforcement in the form of sectors (11).

6. An anti-roll torsion bar produced in conformity with any of Claims 1 to 4, characterised in that cells (12) are arranged on the lateral faces of the bearings (2) in order to reduce the rigidity of horizontal deformation between the bushing forming the inner reinforcement (7) and the outer reinforcement (9) (9').

7. An anti-roll torsion bar produced in conformity with any of Claims 1 to 4, characterised in that the intermediate reinforcement in the form of sectors (11) armours the elastomer of a bearing (2) whose lateral faces are fitted with cells (12).

FIG_1

FIG_2

FIG_3

FIG_4a

FIG_4b

FIG_4c